# EUROPÄISCHE PATENTSCHRIFT

(11) **EP 1 336 044 B1**
(45) Veröffentlichungstag und Bekanntmachung des Hinweises auf die Patenterteilung: **21.04.2004**
(21) Anmeldenummer: 01997635.6
(22) Anmeldetag: 21.11.2001
(51) Int. Cl.: F02M 59/34, F02M 63/02, F02M 55/00, F02M 37/00, F02M 37/20, F04B 49/22, F04B 53/18, F04B 53/06

(54) **EINSPRITZSYSTEM FÜR EINE BRENNKRAFTMASCHINE UND VERFAHREN ZUM REGELN UND/ODER ENTLÜFTEN EINES SOLCHEN EINSPRITZSYSTEMS**
INJECTION SYSTEM FOR AN INTERNAL COMBUSTION ENGINE AND METHOD FOR REGULATION AND/OR BLEEDING OF SAID SYSTEM
SYSTEME D'INJECTION POUR UN MOTEUR A COMBUSTION INTERNE ET PROCEDE DE REGLAGE ET/OU DE MISE A L'ECHAPPEMENT D'UN TEL SYSTEME D'INJECTION

(30) Priorität: 22.11.2000 DE 10057786
(43) Veröffentlichungstag der Anmeldung: 20.08.2003
(73) Patentinhaber: Siemens Aktiengesellschaft, 80333 München (DE)
(72) Erfinder: GROSSNER, Thomas, 93073 Neutraubling (DE); HUSSLEIN, Klaus, 93055 Regensburg (DE); KLESSE, Christoph, 93086 Wörth a. d. Donau (DE); WERNER, Martin, 93155 Hemau (DE); ZANDER, Eckbert, 93105 Tegernheim (DE)
(86) Internationale Anmeldenummer: PCT/DE2001/004369
(87) Internationale Veröffentlichungsnummer: WO 2002/042633

(56) Entgegenhaltungen:
- DE-A- 3 801 929
- DE-A- 19 742 180
- DE-A- 19 900 562
- DE-A- 19 907 311

## Beschreibung

Die Erfindung betrifft ein Einspritzsystem für eine Brennkraftmaschine gemäß dem Oberbegriff des Anspruchs 1 sowie ein Verfahren zum Regeln und/oder Entlüften eines Einspritzsystems für eine Brennkraftmaschine gemäß dem Oberbegriff des Anspruchs 9.

Derartige Einspritzsysteme für Brennkraftmaschinen weisen üblicherweise eine Vorförderpumpe auf, die den einzuspritzenden Kraftstoff über eine Kraftstoffleitung aus einem Kraftstofftank fördert und an eine Hochdruckpumpe weiterleitet, die den zur Einspritzung des Kraftstoffs in die Brennräume der Brennkraftmaschine erforderlichen Einspritzdruck erzeugt. Ausgangsseitig ist die Hochdruckpumpe im Fall eines Common-Rail-Einspritzsystems mit einem Hochdruckspeicher verbunden, aus dem die den einzelnen Brennräumen der Brennkraftmaschine zugeordneten Injektoren den einzuspritzenden Kraftstoff beziehen.

Die bekannten Einspritzsysteme (z.B. DE 19907311) ermöglichen auch eine Spülung der Hochdruckpumpe mit dem einzuspritzenden Kraftstoff, wodurch eine Schmierung und Kühlung der Hochdruckpumpe bewirkt wird. Hierzu zweigt zwischen der Vorförderpumpe und der Hochdruckpumpe eine Zuführung von der die Vorförderpumpe mit der Hochdruckpumpe verbindenden Kraftstoffleitung ab, die ausgangsseitig in das Gehäuse der Hochdruckpumpe mündet. Über die Zuführung wird ein Teil des von der Vorförderpumpe geförderten Kraftstoffs abgezweigt und zur Spülung der Hochdruckpumpe eingesetzt. Anschließend wird der zu Spülzwecken verwendete Kraftstoff über eine Kraftstoffrückleitung in den Kraftstofftank zurückgeführt.

Durch die Spülung der Hochdruckpumpe mit dem aus dem Förderstrom abgezweigten Kraftstoffstrom wird jedoch beim Anlassen der Brennkraftmaschine der Druckaufbau an der Ansaugseite der Hochdruckpumpe verzögert oder sogar verhindert, so dass die Brennkraftmaschine nur mit Verspätung oder gar nicht startet. Daher ist in der zwischen der Vorförderpumpe und der Hochdruckpumpe abzweigenden Zuführung ein Regelventil angeordnet, das den Spülstrom in der Zuführung erst dann frei gibt, wenn der zum Betrieb der Hochdruckpumpe erforderliche Kraftstoffdruck an der Ansaugseite der Hochdruckpumpe erreicht ist.

Bei den bekannten Einspritzsystemen wird die Vorförderpumpe und die Hochdruckpumpe über eine mechanische Verbindung von dem Verbrennungsmotor des Common-Rail-Systems angetrieben, so dass die Drehzahl der Vorförder- und Hochdruckpumpe proportional zu der Motordrehzahl ist. Aufgrund der Abhängigkeit der Drehzahl der Hochdruckpumpe von der Motordrehzahl fördert die Hochdruckpumpe bei niedrigen Motordrehzahlen, die beispielsweise beim Start auftreten, nur einen verhältnismäßig geringen Volumenstrom in den Hochdruckspeicher. Für einen schnellen Start des Motors ist jedoch ein schneller Druckaufbau im Hochdruckspeicher notwendig. Deshalb ist es erforderlich, dass das gesamte Einspritzsystem stets vollständig mit Kraftstoff gefüllt ist und möglichst keine Luft- oder Gasblasen enthält. Durch ein Leerfahren des Kraftstofftanks, durch Wartungsarbeiten am System oder durch Undichtigkeiten kann allerdings Luft in das System gelangen. Um einen verzögerten Druckaufbau beim Startvorgang durch die eingeschlossene Luft im System zu verhindern, sind deshalb Entlüftungseinrichtungen vorgesehen.

Für eine derartige Entlüftung des Einspritzsystems sind üblicherweise zusätzlich zu dem Regelventil für den Spülstrom in der Zuführung im Niederdruckbereich zwischen der Vorförderpumpe und der Hochdruckpumpe einzelne Entlüftungsventile oder Drosseln eingebaut. Dadurch soll erreicht werden, dass die Luft über die Entlüftungsventile oder Drosseln abgeführt und nicht in die Verdrängerräume der Hochdruckpumpe gelangen kann. Beim Einsatz einer Drossel ist es für ein schnelles Entweichen der Luft einerseits erforderlich, dass die Drossel einen verhältnismäßig großen Durchflussquerschnitt aufweist. Andererseits ist die Größe des Durchflussquerschnitts der Drossel hinreichend klein zu wählen, so dass möglichst wenig Kraftstoff durch die Drossel entweichen kann. Daher ist eine zufriedenstellende Dimensionierung der Drossel im Hinblick auf die Größe des Durchflussquerschnitts nur schwierig zu erreichen. Hingegen ist bei der Verwendung von Rückschlagventilen als Entlüftungseinrichtung stets der Aufbau eines bestimmten Drucks in der Kraftstoffleitung erforderlich, um das Rückschlagventil zu öffnen und somit das Einspritzsystem zu entlüften. Hierbei entstehen bei niedrigen Startdrehzahlen des Motors allerdings Probleme hinsichtlich des Aufbaus eines entsprechenden Drucks, der zum Öffnen des Rückschlagventils ausreicht. Somit ist das Entlüften des Einspritzsystems nicht immer sichergestellt.

Ferner ist der Einbau eines Entlüftungsventils bekannt, bei dem ein Schließkörper in einer Führung des Entlüftungsventils geführt ist. Zwischen der Führung und dem Schließkörper ist ein Kapillarspalt vorgesehen, über den beim Entlüftungsvorgang die im System eingeschlossenen Luft abgeführt wird. Nach dem Entlüften fließt der Kraftstoff in den Kapillarspalt. Dabei wird durch den hohen Strömungswiderstand des Kraftstoffs im Kapillarspalt der Schließkörper mitgenommen, so dass das Entlüftungsventil durch den Schließkörper geschlossen wird. Bei einem benetzten Kapillarspalt ergibt sich jedoch das Problem, dass der Schließkörper schon beim Entlüften in seine Dichtposition bewegt wird und die Luft nicht mehr vollständig durch den Kapillarspalt entweichen kann. Dadurch ist eine ausreichende Entlüftung des Einspritzsystems schwierig zu erreichen.

Der Erfindung liegt daher die Aufgabe zugrunde, eine Einspritzsystem bereit zu stellen, das einfach und zuverlässig entlüftet werden kann, wobei gleichzeitig ein schneller Druckaufbau im Hochdruckspeicher sichergestellt ist, und ein Verfahren zum Regeln und/oder Entlüften eines solchen Einspritzsystems.

Die Lösung dieser Aufgabe erfolgt gemäß einem ersten Aspekt der Erfindung durch die Merkmale des Anspruchs 1.

Demzufolge weist das erfindungsgemäße Einspritzsystem eine Vorförderpumpe auf, die mittels einer von der Kraftstoffleitung zur Hochdruckpumpe abzweigenden Zuführung die Hochdruckpumpe zusätzlich mit Kraftstoff zur Schmierung und Kühlung versorgt. Hierbei ist in der Zuführung eine Ventileinrichtung angeordnet, die zum einen den Kraftstoffstrom zur Schmierung und Kühlung der Hochdruckpumpe regelt und zum anderen das Einspritzsystem entlüftet. So ist vor oder bei einem Startvorgang des Motors die in dem Einspritzsystem eingeschlossene Luft über die Ventileinrichtung aus dem Einspritzsystem ableitbar. Ferner sorgt die Ventileinrichtung, vorzugsweise im Zusammenspiel mit einem Vordruckregelventil und einem Hochdruckregelventil, dafür, dass die Zuführung während des Anlassvorgangs der Brennkraftmaschine nach dem Entlüften unterbrochen wird. Durch die Unterbrechung ist es möglich, dass sich ein Druck in der Kraftstoffleitung zur Hochdruckpumpe während des Anlassvorgangs aufbaut und die Hochdruckpumpe vollständig mit Kraftstoff gefüllt wird. Darüber hinaus ist bei einem weiteren Druckanstieg nach der Vorförderpumpe vorgesehen, dass die Ventileinrichtung einen Spülpfad zu der Hochdruckpumpe frei gibt. Hierzu umfasst die Ventileinrichtung zumindest ein integriertes und beweglich in der Ventileinrichtung angeordnetes Stellglied sowie eine erste und eine zweite Drosseleinrichtung.

Das Stellglied nimmt in Abhängigkeit von einem Druck des Kraftstoffs in der Zuführung vor der Ventileinrichtung jeweils eine Stellung ein, in der entweder eine erste Verbindung durch die erste Drosseleinrichtung zu der Hochdruckpumpe frei gegeben oder die Zuführung zu der Hochdruckpumpe unterbrochen oder eine zweite Verbindung durch die zweite Drosseleinrichtung zu der Hochdruckpumpe frei gegeben ist. Durch die erfindungsgemäße Kombination der beiden Drosseleinrichtungen mit dem Stellglied in der Ventileinrichtung bietet sich der große Vorteil, dass der Kraftstoffstrom, der von der Vorförderpumpe der Hochdruckpumpe zugeführt wird, über die Ventileinrichtung sowohl geregelt als auch gleichzeitig entlüftet wird. Die erfindungsgemäße Ventileinrichtung reagiert selbsttätig auf die jeweiligen Betriebszustände des Motors über den jeweils vorliegenden Druck in der Kraftstoffleitung nach der Vorförderpumpe. Hierdurch ist das Entlüften des Systems, ein schneller Druckaufbau im Hochdruckspeicher und somit auch ein problemloser Wiederstart von Einspritzsystemen gewährleistet, die eingeschlossene Luft enthalten.

Vorteilhafte Ausführungsformen des erfindungsgemäßen Einspritzsystems sind in den weiteren Ansprüchen beschrieben.

Es wird bevorzugt, dass die erste und die zweite Drosseleinrichtung unterschiedliche Durchflussquerschnitte aufweisen. Dadurch ist es möglich, die Durchflussquerschnitte der einzelnen Drosseln einem jeweiligen Anwendungsfall anzupassen. Hierbei weist die erste Drosseleinrichtung, die vorzugsweise zur Entlüftung des Einspritzsystems vorgesehen ist, beispielsweise einen verhältnismäßig kleinen Durchflussquerschnitt auf, so dass möglichst wenig Kraftstoff entweichen kann. Hingegen ist der Durchflussquerschnitt der zweiten Drosseleinrichtung, über die der Kraftstoffstrom zur Spülung der Hochdruckpumpe geleitet wird, ausreichend groß dimensioniert, so dass eine zuverlässige Zuleitung von Kraftstoff zur Spülung der Hochdruckpumpe gewährleistet ist. Somit sind die Drosseleinrichtungen jeweils einzeln für den jeweiligen Anwendungsfall geeignet zu dimensionieren.

Für eine kompakte Bauweise der Ventileinrichtung bietet es Vorteile, wenn die erste und/oder zweite Drosseleinrichtung in dem Stellglied der Ventileinrichtung integriert ausgebildet ist. Hierdurch ist die jeweilige Drosseleinrichtung auch bei beengten Platzverhältnissen an einer gewünschten Stelle in der Ventileinrichtung positionierbar.

Für eine Verbindung eines Ventileinlasses mit einem Ventilauslass der Ventileinrichtung hat es sich als vorteilhaft gezeigt, dass das Stellglied zumindest einen Durchgangskanal aufweist, durch den der die Ventileinrichtung durchströmende Kraftstoffstrom geleitet wird. Der Durchgangskanal kann auf konstruktiv einfache Art und Weise als Bohrung durch das Stellglied ausgebildet sein.

Ferner wird bevorzugt, dass das Stellglied als Durchflussquerschnitt-Stellglied oder Druckstellglied vorgesehen ist. Hierdurch lässt sich bei einer Änderung des Drucks in der Kraftstoffleitung eine Umleitung der Durchflusswege des Kraftstoffs durch die Ventileinrichtung schnell und zuverlässig erzielen. Somit ist eine Doppelfunktion der Ventileinrichtung als Entlüftungsventil und Spülventil auf einfache Weise realisierbar. In diesem Zusammenhang bietet es Vorteile, wenn die Ventileinrichtung zumindest ein Durchflussquerschnitt-Regelventil oder Druckregelventil umfasst. Beispielsweise lässt sich durch das Vorsehen von zumindest einem Wegeventil und/oder zumindest einem Druckbegrenzungsventil in der Ventileinrichtung ein Verstellen des Durchflusswegs in der Ventileinrichtung besonders einfach und problemlos erreichen.

Für eine kompakte Bauweise der Ventileinrichtung bietet es weiterhin Vorteile, wenn die Drosseleinrichtungen, das zumindest eine Wegeventil und/oder das zumindest eine Druckbegrenzungsventil in der Ventileinrichtung zusammengebaut sind. Die Ventile sind dabei in einem als Kombinationsventil ausgeführten Bauelement integriert. Hierdurch kann die Ventileinrichtung auch bei einem geringen Einbauraum in der Hochdruckpumpe sicher an die Zuführung angeschlossen werden.

Die Lösung, der der Erfindung zugrunde liegenden Aufgabe erfolgt gemäß einem weiteren Aspekt der Erfindung durch ein Verfahren zum Regeln und/oder Entlüften eines Einspritzsystems gemäß dem Anspruch 9.

Wie aus dem Vorangehenden ersichtlich ist, wird gemäß dem Verfahren über eine Zuführung aus der Kraftstoffleitung zwischen der Vorförderpumpe und der Hochdruckpumpe Kraftstoff zur Schmierung und Kühlung der Hochdruckpumpe abgezweigt, wobei der Kraftstoffstrom mittels der Ventileinrichtung in der Zuführung geregelt und/oder das Einspritzsystem entlüftet wird. Hierbei wird sowohl das Regeln des Kraftstoffstroms in der Zuführung als auch das Entlüften des Einspritzsystems durch zumindest ein beweglich in der Ventileinrichtung angeordnetes Stellglied erreicht, dass in Abhängigkeit von einem Druck des Kraftstoffstroms in der Zuführung im Wesentlichen zwischen drei verschiedenen Stellungen in der Ventileinrichtung verstellt wird. Aufgrund des in der Ventileinrichtung auf das Stellglied wirkenden Drucks ergibt sich der große Vorteil, dass die Ventileinrichtung selbsttätig auf die jeweiligen Betriebszustände und die daraus resultierenden Drücke in der Kraftstoffleitung reagiert. Dies vereinfacht die Steuerung und Regelung des Kraftstoffstroms in dem Einspritzsystem erheblich. Darüber hinaus wird durch die Bewegung des Stellgliedes in der Ventileinrichtung auch das Entlüften des Kraftstoffsystems sichergestellt, so dass ein verzögerter Druckaufbau aufgrund von im Einspritzsystem eingeschlossener Luft effektiv verhindert wird.

Nach einer vorteilhaften Ausführungsform des erfindungsgemäßen Verfahrens zum Regeln und Entlüften des Einspritzsystems wird in einer Ruhestellung des Stellglieds eine erste Verbindung durch eine erste Drosseleinrichtung zu der Hochdruckpumpe frei gegeben. In der Ruhestellung des Stellglieds erfolgt die Entlüftung des Einspritzsystems, wobei die Luft über die erste Drosseleinrichtung aus dem Niederdruckbereich zu der Hochdruckpumpe abgeführt wird. Nach dem Entlüften wird das Stellglied mit einem zunehmenden Staudruck des durch die Ventileinrichtung strömenden Kraftstoffstroms aus seiner Ruhestellung in eine zweite Stellung bewegt, bei der die Verbindung zu der Hochdruckpumpe im Wesentlichen verschlossen ist. In der zweiten Stellung ist die Zuführung unterbrochen, d.h. es strömt im Wesentlichen kein Spülstrom zur Hochdruckpumpe, so dass der gesamte, entlüftete Kraftstoffstrom über die Kraftstoffleitung von der Vorförderpumpe zu der Hochdruckpumpe gefördert wird und ein schneller Druckaufbau in der Hochdruckpumpe gewährleistet ist. Da der gesamte Kraftstoffstrom zum Druckaufbau zur Verfügung steht, wird ein verzögerter Start der Brennkraftmaschine verhindert. Bei einem weiteren Druckanstieg wird das Stellglied in eine dritte Stellung bewegt, bei der eine zweite Verbindung durch eine zweite Drosseleinrichtung zu der Hochdruckpumpe frei gegeben wird. In der dritten Stellung strömt der über die Zuführung aus der Kraftstoffleitung abgezweigte Kraftstoffvolumenstrom zu der Hochdruckpumpe, um diese zu kühlen und zu schmieren.

In einer weiteren Ausführungsform fliesst durch die erste Drosseleinrichtung in Ruhestellung des Stellglieds ein Kraftstoffstrom, der zwischen 1/3 und 2/3 der von der Vorförderpumpe insgesamt geförderten Kraftstoffmenge beträgt. Beispielsweise fördert beim Starten die Vorförderpumpe etwa 150 ml, wobei etwa 5-10 ml zum Entlüften durch einen Spülkanal fliesst. In der dritten Stellung können mehrere 100 ml durch den Spülkanal und damit durch die zweite Drosseleinrichtung zur Kühlung durch die Hochdruckpumpe fliessen. Dabei beträgt der Staudruck zum Übergang von der Ruhestellung zur zweiten Stellung bevorzugt 0,2 - 0,4 bar. Der Übergang zwischen der zweiten Stellung und der dritten Stellung der Stellglieds liegt bevorzugt zwischen 1,5 und 2 bar. Dabei öffnet das bzw. die Einlassventile der Hochdruckpumpe bei etwa 0,7 bar. Bei Ausführungsformen mit einem höheren Öffnungsdruck des Einlassventils verschieben sich entsprechend die Umschaltpunkte zwischen der Ruhestellung und der zweiten Stellung bzw. der zweiten Stellung und der dritten Stellung des Stellglieds.

Nachfolgend wird die Erfindung anhand von beispielhaft in den Zeichnungen dargestellten Ausführungsformen näher erläutert.
Es zeigen:
Fig. 1 ein Einspritzsystem mit einer an einer Stelle Z vorgesehenen Ventileinrichtung gemäß der Erfindung;
Fig. 2 ein Diagramm mit einer idealen Kennlinie einer Ventileinrichtung des erfindungsgemäßen Einspritzsystems;
Fig. 3a ein Schaltbild einer Ventileinrichtung gemäß einer ersten Ausführungsform der Erfindung;
Fig. 3b eine schematische Querschnittsansicht der Ventileinrichtung nach Fig. 3a;
Fig. 4a ein Schaltbild einer Ventileinrichtung gemäß einer zweiten Ausführungsform der Erfindung;
Fig. 4b eine schematische Querschnittsansicht der Ventileinrichtung nach Fig. 4a;
Fig. 5a ein Schaltbild einer Ventileinrichtung gemäß einer dritten Ausführungsform der Erfindung;
Fig. 5b eine schematische Querschnittsansicht der Ventileinrichtung nach Fig. 5a;
Fig. 6a ein Schaltbild einer Ventileinrichtung gemäß einer vierten Ausführungsform der Erfindung;
Fig. 6b eine schematische Querschnittsansicht der Ventileinrichtung nach Fig. 6a;
Fig. 7a ein Schaltbild einer Ventileinrichtung gemäß einer fünften Ausführungsform der Erfindung;
Fig. 7b eine schematische Querschnittsansicht der Ventileinrichtung nach Fig. 7a.

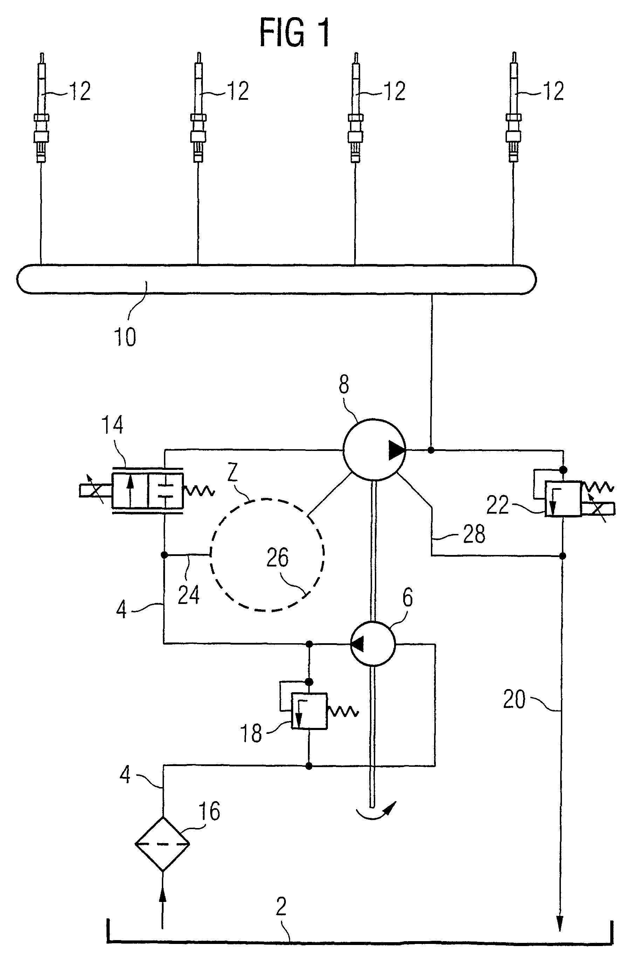

Fig. 1 zeigt schematisch den Aufbau eines Einspritzsystems, bei dem Kraftstoff aus einem Kraftstofftank 2 über eine Kraftstoffleitung 4 durch eine mechanisch, vorzugsweise über die Brennkraftmaschine, angetriebene Vorförderpumpe 6 angesaugt und durch die Vorförderpumpe 6 zu einer mechanisch ebenfalls vorzugsweise über die Brennkraftmaschine angetriebene Hochdruckpumpe 8 gefördert wird. Die Hochdruckpumpe 8 verdichtet den Kraftstoff und speist ihn unter hohem Druck in einen Hochdruckspeicher 10 ein. Der Hochdruckspeicher 10 steht mit Injektoren 12 in Verbindung, über die der Kraftstoff in eine Brennkammer der Brennkraftmaschine eingespritzt wird. Zwischen der Vorförderpumpe 6 und der Hochdruckpumpe 8 ist in der Kraftstoffleitung 4 ein Durchflussquerschnitt-Regelventil 14 angeordnet, um den Volumenstrom zur Hochdruckpumpe 8 bedarfsabhängig zu regeln. Ferner steht die Vorförderpumpe 6 ansaugseitig über ein Vorfilter 16 mit dem Kraftstofftank 2 in Verbindung.

An der Ansaugseite der Vorförderpumpe 6 ist ein Vordruckregelventil 18 angeordnet, dass beim Überschreiten eines vorgegebenen Vordrucks einen Teil des von der Vorförderpumpe 6 geförderten Kraftstoffs abzweigt und zur Ansaugseite der Vorförderpumpe 6 zurückführt, um ein Überschreiten des vorgegebenen Vordrucks zu verhindern und den Vordruck konstant zu halten.

Der Hochdruckspeicher 10 ist über eine Kraftstoffrückleitung 20 an den Kraftstofftank 2 angeschlossen. In der Kraftstoffrückleitung 20 ist ein Hochdruckregelventil 22 angeordnet, mit dem sich der Druck im Hochdruckspeicher 10 regeln und entsprechend der gewünschten Betriebsbedingungen der Brennkraftmaschine einstellen lässt.

Zwischen der Vorförderpumpe 6 und dem Durchflussquerschnitt-Regelventil 14 ist eine Zuführung 24 zur Hochdruckpumpe 8 an die Kraftstoffleitung 4 angeschlossen, um der mechanisch angetriebenen Hochdruckpumpe 8 Kraftstoff zur Schmierung und Kühlung zuzuführen. Das Vordruckregelventil 18 und das Durchflussquerschnitt-Regelventil 14 sind nacheinander an die Kraftstoffleitung 4 angeschlossen, wobei die Zuführung 24 zu der Hochdruckpumpe in Flussrichtung vor dem Durchflussquerschnitt-Regelventil 14 von der Kraftstoffleitung 4 abzweigt und als Verbindungsleitung zur Hochdruckpumpe 8 ausgebildet ist.

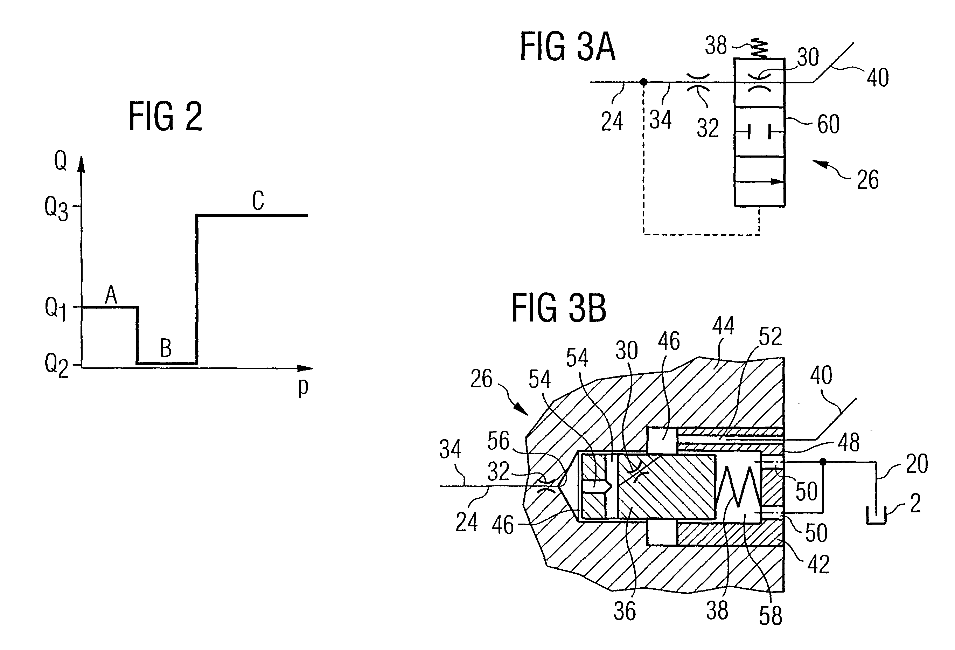

Auf der Zulaufseite zur Hochdruckpumpe 8 ist in der Zuführung 24 an einer in gestrichelter Linie angedeuteten Stelle Z eine in Fig. 1 nicht dargestellte Ventileinrichtung 26 angeordnet. Verschiedene Ausführungsformen der erfindungsgemäßen Ventileinrichtung in der Zuführung 24 sind in den Fig. 3a bis 7b erläutert. Die Ventileinrichtung 26 regelt zum einen den Kraftstoffstrom zur Kühlung und Schmierung der Hochdruckpumpe. Zum anderen dient die Ventileinrichtung 26 zur Entlüftung des Einspritzsystems. Um einen geschlossenen Schmier- und Kühlkreislauf zu bilden, ist die Zuführung 24 auf der Ablaufseite der Hochdruckpumpe 8 über eine Verbindungsleitung 28 und die Kraftstoffrückleitung 20 an den Kraftstofftank 2 angeschlossen.

Im Folgenden wird die Funktionsweise der Ventileinrichtung 26 in der Zuführung 24 zwischen der Vorförderpumpe 6 und der Hochdruckpumpe 8 anhand Fig. 2 näher erläutert. Die Ventileinrichtung 26, die an der Stelle Z in die Hochdruckpumpe 8 eingebaut ist, dient einerseits zum Entlüften des Einspritzsystems beim Startvorgang der Brennkraftmaschine. Andererseits wird über die Ventileinrichtung 26 der Kraftstoffstrom zur Schmierung und Kühlung der Hochdruckpumpe 8 eingestellt. In Fig. 2 ist in einem Diagramm eine Kennlinie der Ventileinrichtung 26 im Betrieb dargestellt, wobei der Durchflussquerschnitt Q der Ventileinrichtung 26 in Abhängigkeit des Drucks p nach der Vorförderpumpe 6 aufgetragen ist. Im Ruhezustand (Abschnitt A in Fig. 2) gibt die Ventileinrichtung 26 einen Entlüftungsquerschnitt Q1 frei, durch den die im Einspritzsystem eingeschlossene Luft, die beispielsweise bei einem Leerfahren des Kraftstofftanks 2 oder durch Undichtigkeiten in das Einspritzsystem gelangt ist, entweicht und aus dem Einspritzsystem abgeführt wird. Nach dem Entlüften liegt durch das Strömen des im Wesentlichen von Luft befreiten Kraftstoffstroms durch die Ventileinrichtung 26 ein höherer Strömungswiderstand in der Ventileinrichtung 26 an. Aufgrund des höheren Strömungswiderstandes staut sich der Kraftstoffstrom in der Ventileinrichtung 26 und baut so einen Staudruck auf, der abhängig von dem Ausmaß der Entlüftung des Kraftstoffstroms ist. Über den sich aufbauenden Staudruck wird die Ventileinrichtung 26 geschlossen, so dass der im Wesentlichen geschlossenen Durchflussquerschnitt Q2 vorliegt (Abschnitt B in Fig. 2), durch den lediglich ein Leckagestrom entweicht. Somit steht der gesamte, von der Vorförderpumpe 6 geförderte Kraftstoffstrom zum Speisen der Hochdruckpumpe 8 zur Verfügung und wird der Hochdruckpumpe 8 über die Kraftstoffleitung 4 zugeführt. Wenn daraufhin von der Vorförderpumpe 6 mehr Kraftstoff gefördert wird, als von der Hochdruckpumpe 8 abgenommen wird, beispielsweise nach einem Anspringen des Motors bei einer höheren Drehzahl des Motors, gibt die Ventileinrichtung 26 einen Durchflussquerschnitt Q3 in der Zuführung 24 zur Spülung der Hochdruckpumpe 8 frei (Abschnitt C in Fig. 2). Demnach wird, wie in Fig. 2 zu erkennen, bei keinem oder einem geringen Druck p des Kraftstoffstroms nach der Vorförderpumpe 6 in der Ventileinrichtung 26 der Entlüftungsquerschnitt Q1 frei gegeben, der ausreichend groß ist, um eine sichere Entlüftung des Einspritzsystems zu gewährleisten (Abschnitt A in Fig. 2). Bei höheren Drücken p unterbricht die Ventileinrichtung 26 die Zuführung 24, so dass die Hochdruckpumpe 8 vollständig mit Kraftstoff gefüllt wird und ein schneller Druckaufbau im Hochdruckspeicher 10 sicher gestellt ist (Abschnitt B in Fig. 2). Bei einem weiteren Druckanstieg p in der Kraftstoffleitung 4 und nach der Vorförderpumpe 6 gibt die Ventileinrichtung 26 den Spülpfad zur Hochdruckpumpe 8 frei (Abschnitt C in Fig. 2). Hierbei reagiert die Ventileinrichtung 26 über den anliegenden Staudruck selbsttätig auf die jeweiligen Betriebszustände der Brennkraftmaschine und sorgt durch eine anfängliche Entlüftung des Einspritzsystems mit anschließender Regelung des Kraftstoffstroms zur Kühlung und Spülung der Hochdruckpumpe 8 für einen schnellen Druckaufbau im Hochdruckspeicher 10. Durch das Entlüften des Einspritzsystems im Ruhezustand der Ventileinrichtung 26 sowie das Regeln des Kraftstoffstroms zur Schmierung und Kühlung der Hochdruckpumpe 8 während des Anlassvorgangs der Brennkraftmaschine ist ein schneller Druckaufbau im Hochdruckspeicher 10 sichergestellt.

Fig. 3a zeigt ein Schaltbild einer ersten Ausführungsform einer Ventileinrichtung 26, die an der in Fig. 1 dargestellten Stelle Z in dem erfindungsgemäßen Einspritzsystem angeordnet ist. Wie in den Fig. 3a zu erkennen, ist die Ventileinrichtung 26 als Kombinationsventil 60 ausgeführt, das die Funktionen eines Durchflussquerschnitt-Regelventils und zweier Drosseleinrichtungen 30, 32 in kompakter Bauform realisiert. In einer an die Zuführung 24 angeschlossenen Zulaufleitung 34 ist die zweite Drosseleinrichtung 32 und in einem Stellglied der Ventileinrichtung 26 ist die erste Drosseleinrichtung 30 vorgesehen. Dabei ist das Stellglied von einer Rückstelleinrichtung 38 mit einem Haltedruck belegt. Das Stellglied ist hierbei so angeordnet, dass es in seiner Ausgangsstellung eine erste Verbindung von der Zulaufleitung 34 durch die zweite Drosseleinrichtung 32 und die erste Drosseleinrichtung 30 in einen Zulaufkanal 40 zur Hochdruckpumpe 8 frei gibt. In seiner zweiten Stellung verschließt das Stellglied die Zuführung 24 zur Hochdruckpumpe 8. Ferner ist das Stellglied in seiner dritten Stellung derart angeordnet, dass es eine Verbindung von der Zulaufleitung 34 durch die erste Drosseleinrichtung 30 und den Zulaufkanal 40 zur Hochdruckpumpe 8 frei gibt. Hierbei dient die erste Drosseleinrichtung 30 als Entlüftungsdrossel, über die in dem Einspritzsystem eingeschlossene Luft entweicht, und die zweite Drosseleinrichtung 32 als Spüldrossel, über die der Kraftstoffstrom zur Kühlung und Schmierung der Hochdruckpumpe 8 einstellbar ist.

Ein Ausführungsbeispiel für eine solche Ventileinrichtung 26 nach Fig. 3a ist in Fig. 3b im Querschnitt schematisch dargestellt. Die Ventileinrichtung 26 umfasst einen Ventilkörper 42, der beispielsweise über ein nicht dargestelltes Gewinde in ein Gehäuse 44 der Ventileinrichtung 26 eingeschraubt ist. Der Ventilkörper 42 und das Gehäuse 44 weisen jeweils eine zylindrische Ausnehmung 46 mit unterschiedlichen Durchmessern auf, in der das Stellglied 36 in Form eines zylindrischen Kolbens eingebracht und geführt ist. Das Stellglied 36 ist über die als Feder ausgebildete Rückstelleinrichtung 38 mit einer Endfläche 48 des Ventilkörpers 42 verbunden. In der Endfläche 48 sind Ablauföffnungen 50 angeordnet, die an die Kraftstoffrückleitung 20 zum Kraftstofftank 2 angeschlossen sind. Alternativ können die Ablauföffnungen auch an die Leitung 40 angeschlossen werden. Das Stellglied 36 ist über die Rückstelleinrichtung 38 gegen das Ende der Ausnehmung 46 des Gehäuses 44 vorgespannt. Ferner weist der Ventilkörper 42 eine Innenbohrung 52 auf, die sich entlang der Längserstreckung der Ausnehmung 46 erstreckt und an den Zulaufkanal 40 zur Hochdruckpumpe 8 angeschlossen ist. In dem Stellglied 36 sind mehrere Durchgangskanäle 54 vorgesehen, die eine Verbindung von der Zulaufleitung 34 zu der Hochdruckpumpe 8 durch das Stellglied 36 herstellen. Im vorliegenden Fall ist die erste Drosseleinrichtung 30, die als Entlüftungsdrossel dient, in dem Stellglied 36 integriert ausgebildet und an einen Durchgangskanal 54 angeschlossen. Die als Spüldrossel wirkende zweite Drosseleinrichtung 32 ist hingegen an die Zulaufleitung 34 angeschlossen und im Gehäuse 44 der Ventileinrichtung 26 vor einem Ventileinlass 56 eingebaut.

Der Kraftstoffstrom zur Kühlung und Schmierung wird durch die zweite Drosseleinrichtung 32 eingestellt. Dabei weist die zweite Drosseleinrichtung 32 einen größeren Durchflussquerschnitt als die erste Drosseleinrichtung 30 auf, um einen gleichmäßigen Spülstrom zur Hochdruckpumpe 8 zu gewährleisten. Ein Leckagestrom der Ventileinrichtung 26 fließt in einen Federraum 58 und wird über die Ablauföffnungen 50 in die Kraftstoffrückleitung 20 abgeführt.

In der Ausgangsstellung wird das Stellglied 36 aufgrund der Federkraft der Rückstelleinrichtung 38 gegen den Anschlag des Gehäuses 44 gedrückt. Dabei ist das Stellglied 36 in der Ausnehmung 46 der Ventileinrichtung 26 derart angeordnet, dass eine erste Verbindung von der Zulaufleitung 34 durch die zweite Drosseleinrichtung 32, einen in Fig. 3b horizontal ausgerichteten Durchgangskanal 54, die erste Drosseleinrichtung 30, die Innenbohrung 52 des Ventilkörpers zu dem Zulaufkanal 40 der Hochdruckpumpe 8 freigegeben ist. In der Ausgangsstellung der Ventileinrichtung 26 kann die Luft über diese erste Verbindung durch die zweite und die erste Drosseleinrichtung aus dem Einspritzsystem abgeführt werden.

Nach dem Entlüften baut sich an der ersten Drosseleinrichtung 30 des Stellglieds 36 aufgrund des geringen Durchflussquerschnitts ein Staudruck auf, sobald Kraftstoff durch die Ventileinrichtung 26 strömt. Der Haltedruck der Rückstelleinrichtung 38 auf das Stellglied 36 ist so eingestellt, dass bereits ein geringer Druck nach der Vorförderpumpe 6 genügt, um das Stellglied 36 aus seiner Ausgangsstellung in eine zweite Stellung nach rechts zu verschieben. In der zweiten Stellung ist eine Verbindung zwischen der Zulaufleitung 34 und den Zulaufkanal 40 durch das Stellglied 36 unterbrochen. Die Innenbohrung 52 ist dabei so angeordnet, dass ihre Öffnung durch das Stellglied 36 in der zweiten Stellung verschlossen ist. Die erste Verbindung über die Entlüftungsdrossel 30 ist somit verschlossen und der vollständige Kraftstoffstrom kann von der Vorförderpumpe 6 der Hochdruckpumpe 8 zugeführt werden. Dadurch ist ein schneller Druckaufbau in der Hochdruckpumpe 8 sichergestellt.

Wenn der von der Vorförderpumpe 6 bereitgestellte Förderstrom höher ist als von der Hochdruckpumpe 8 benötigt, steigt der Staudruck an der Entlüftungsdrossel 30 weiter an, so dass das Stellglied 36 gegen die Rückstelleinrichtung 38 in eine dritte Stellung bewegt wird. In der dritten.Stellung ist eine zweite Verbindung über die Spüldrossel 32 geöffnet. Die zweite Verbindung gibt einen Weg von der Zulaufleitung 34 durch den horizontal ausgerichteten Durchgangskanal 54, einen hierzu rechtwinklig angeordneten zweiten Durchgangskanal 54, die Innenbohrung 52 zu dem Zulaufkanal 40 der Hochdruckpumpe 8 für den Kraftstoffstrom frei. Das Einspritzsystem ist in der zweiten Stellung des Stellgliedes 36 in seinem normalen Betriebszustand. Die Hochdruckpumpe 8 wird durch die in der Zuführung 24 abgezweigten Kraftstoffvolumenstrom gekühlt und geschmiert.

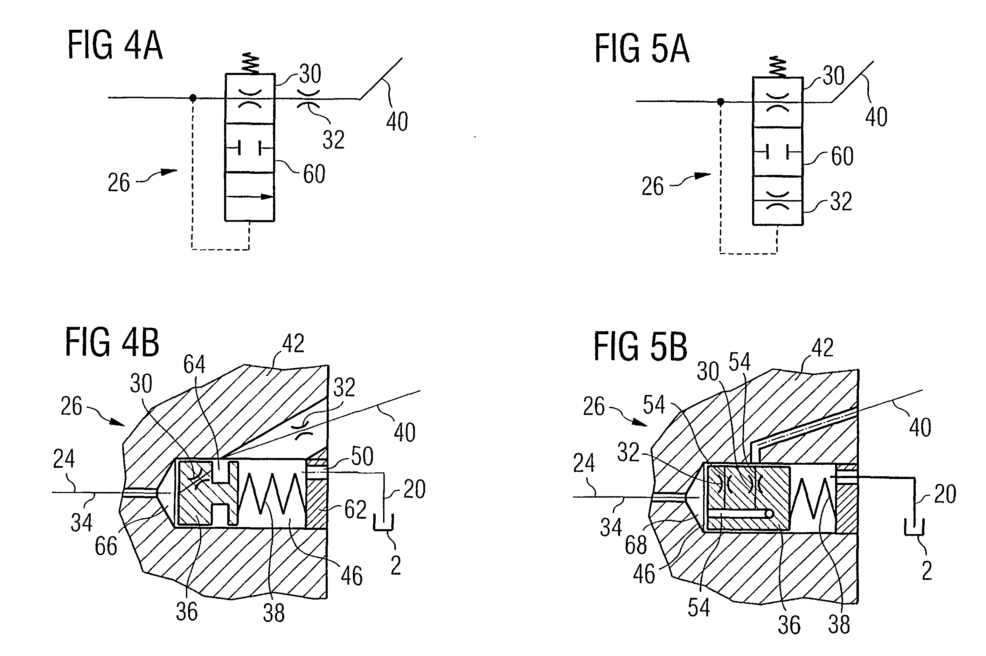

In der Fig. 4a ist eine zweite Ausführungsform einer Ventileinrichtung in einem Schaltbild gezeigt, bei dem im Unterschied zu Fig. 3a die zweite Drosseleinrichtung 32 (Spüldrossel) in dem Zulaufkanal 40 zu der Hochdruckpumpe 8 angeordnet ist. Demnach umfasst die Ventileinrichtung 26 im vorliegenden Fall ein Kombinationsventil 60, das sowohl die Funktion eines Durchflussquerschnitt-Regelventils als auch die Funktion der als Entlüftungsdrossel vorgesehenen ersten Drosseleinrichtung 30 beinhaltet, und die als Spüldrossel ausgebildete zweite Drosseleinrichtung 32. Im Wesentlichen entspricht der Aufbau der in Fig. 4a gezeigten Ventileinrichtung 26 der nach Fig. 3a, wobei jedoch nach Fig. 4a die zweite Drosseleinrichtung 32 an den Zulaufkanal 40 zur Hochdruckpumpe 8 angeschlossen ist.

Fig. 4b zeigt ein Ausführungsbeispiel für eine Ventileinrichtung 26 mit dem Schaltbild nach Fig. 4a. Der Ventilkörper 42 weist die zylindrische Ausnehmung 46 auf, in der das Stellglied 36 der Ventileinrichtung 26 beweglich angeordnet ist. Das Stellglied 36 ist hierbei über die Rückstelleinrichtung 38 an einem Verschlusselement 62 für die Ausnehmung 46 angebracht und wird durch die Rückstelleinrichtung 38 gegen das dem Verschlusselement 62 gegenüberliegende Ende der Ausnehmung 46 in der Ausgangsstellung vorgespannt.

Bei einem Startvorgang mit Luft im Einspritzsystem wird die Luft über die Zulaufleitung 34 durch die in dem Stellglied 36 integrierte erste Drosseleinrichtung 30, eine am Stellglied 36 ausgebildete umlaufende Nut 64 in den Zulaufkanal 40 zu einem Innenraum der Hochdruckpumpe 8 geführt. Wenn die Luft vollständig über diese erste Verbindung von der Zulaufleitung 34 über die erste Drosseleinrichtung 30 zu der Hochdruckpumpe 8 entwichen ist, baut sich an der Entlüftungsdrossel 30 der Staudruck auf. Der Staudruck bewegt das Stellglied 36 gegen die Haltekraft der Rückstelleinrichtung 38 aus seiner Ruhestellung in eine zweite Stellung, in der die erste Verbindung über die Entlüftungsdrossel 30 und die Zuführung 24 geschlossen ist. In der zweiten Stellung des Stellglieds 36 kann der gesamte von der Vorförderpumpe 6 bereitgestellte Kraftstoffstrom direkt der Hochdruckpumpe 8 zugeführt werden. Sobald der Förderstrom von der Vorförderpumpe 6 derart hoch ist, dass die Hochdruckpumpe 8 voll gefüllt ist, steigt der Druck an dem Stellglied 36 weiter an und schiebt das Stellglied 36 gegen die Haltekraft der Rückstelleinrichtung 38 weiter nach rechts in eine dritte Stellung, in der eine zweite Verbindung über die zweite Drosseleinrichtung 32 geöffnet ist. Die zweite Verbindung verläuft von der Zulaufleitung 34 durch einen Steuerraum 66, der zwischen dem linken Ende der zylindrischen Ausnehmung 46 und der Vorderfläche des Stellglieds 36 ausgebildet ist, in den Zulaufkanal 40 und durch die als Spüldrossel ausgebildete zweite Drosseleinrichtung 32 zu der Hochdruckpumpe 8. In der dritten Stellung des Stellglieds 36 befindet sich das Einspritzsystem im normalen Betriebszustand, wobei der Spülstrom zu der Hochdruckpumpe 8 über die Ventileinrichtung 26 einstellbar ist. Ein während der Spülung auftretender Leckagestrom in der Ventileinrichtung 26 kann über die in dem scheibenförmigen Verschlusselement 62 ausgebildete Ablauföffnung 50 und die Kraftstoffrückleitung 20 in den Kraftstofftank 2 rückgeführt werden.

In der Fig. 5a ist eine dritte Ausführungsform eines Schaltbilds einer Ventileinrichtung 26 gezeigt, bei der die Ventileinrichtung 26 die Funktionen der ersten 30 und der zweiten Drosseleinrichtung 32 in einer kompakten Bauform in dem Kombinationsregelventil 60 realisiert. Nach dem in Fig. 5b in einer schematischen Querschnittsansicht dargestellten Ausführungsbeispiel für eine Ventileinrichtung 26 mit dem Schaltbild nach Fig. 5a sind beide Drosseleinrichtungen 30, 32 in dem Stellglied 36 der Ventileinrichtung 26 integriert. Hierbei sind die erste und die zweite Drosseleinrichtung 30, 32 parallel zueinander angeordnet und jeweils an einen Durchgangskanal 54 des Stellglieds 36 angeschlossen. In der Ruhestellung ist das Stellglied 36 derart in der Ausnehmung 46 des Ventilkörpers 42 angeordnet, das eine erste Verbindung zum Entlüften des Einspritzsystems von der Zulaufleitung 34 in den Steuerraum 66, durch einen horizontalen Durchgangskanal 54 des Stellgliedes 36, die erste Drosseleinrichtung 30 in den Zulaufkanal 40 zum Innenraum der Hochdruckpumpe 8 freigegeben ist. Mit zunehmenden Staudruck an der ersten Drosseleinrichtung 30 wird das Stellglied 36 gegen die Federkraft der Rückstelleinrichtung 38 nach rechts in seine zweite Stellung verschoben, so dass eine Öffnung des Zulaufkanals 40 in die Ausnehmung 46 durch das Stellglied 36 verschlossen ist. In dieser zweiten Stellung ist die Zuführung 24 zu der Hochdruckpumpe 8 unterbrochen. Nach dem Anspringen des Motors und höheren Drehzahlen steigt der Staudruck weiter an, wodurch sich das Stellglied 36 weiter nach rechts in seine dritte Stellung bewegt. In der dritten Stellung ist nunmehr eine zweite Verbindung von der Zulaufleitung 34 in den Steuerraum 66, durch einen Abschnitt des horizontalen Durchgangskanals 54 und die zweite, als Spüldrossel wirkende Drosseleinrichtung 32 in den Zulaufkanal 40 zum Spülen der Hochdruckpumpe 8 freigegeben.

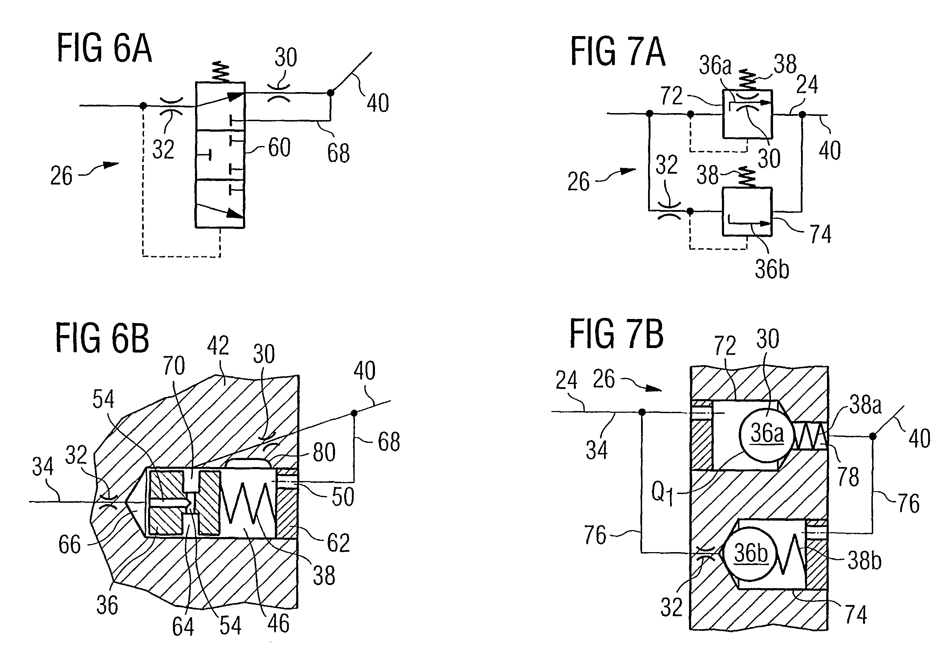

Fig. 6a zeigt eine vierte Ausführungsform eines Schaltbilds für eine Ventileinrichtung gemäß der Erfindung. Die Ventileinrichtung 26 besteht aus dem als 3/3-Wege-Ventil ausgebildeten Kombinationsventil 60, der ersten Drosseleinrichtung 30, die in dem Zulaufkanal 40 angeordnet ist, und der zweiten Drosseleinrichtung 32, die in der Zulaufleitung 34 zu dem Kombinationsventil 60 vorgesehen ist. Ferner ist eine Leckagerückleitung 68 vorgesehen, die einen aus dem Kombinationsventil 60 austretenden Leckagestrom in den Zulaufkanal 40 zu der Hochdruckpumpe 8 zurückführt.

In Fig. 6b ist ein Ausführungsbeispiel einer Ventileinrichtung 26 mit einem Schaltbild nach Fig. 6a im Querschnitt dargestellt, bei dem das Stellglied 36 ein in der zylindrischen Ausnehmung 46 des Ventilkörpers 42 angeordneter beweglicher Kolben ist. Der Kolben weist eine umlaufende Nut 64 auf, die einen Ringkanal 68 in der Wandung des Stellgliedes 36 ausbildet. In den Ringkanal 70 öffnet sich ein Durchgangskanal 54 des Stellglieds 36, so dass in der in Fig. 6b gezeigten Ausgangsstellung des Stellglieds 36 das Einspritzsystem über eine erste Verbindung von der Zulaufleitung 34 in den Steuerraum 66, durch den Durchgangskanal 54 in den Ringkanal 70 sowie durch die an den Zulaufkanal 40 angeschlossene erste Drosseleinrichtung 30 freigegeben ist. In dieser Ruhestellung des Stellglieds 36 wird das Einspritzsystem entlüftet. Nach dem Entlüften steigt der Staudruck an der ersten Drosseleinrichtung 30 und dem Stellglied 36 an, so dass das Stellglied 36 gegen die Federkraft der Rückstelleinrichtung 38 nach rechts verschoben wird, bis die Verbindung zwischen dem Ringkanal 70 und dem Zulaufkanal 40 zu der Hochdruckpumpe 8 unterbrochen ist. In der zweiten Stellung ist die Ventileinrichtung 26 geschlossen. Mit zunehmenden Staudruck nach dem Füllen der Hochdruckpumpe 8 wird das Stellglied 36 noch weiter gegen die Federkraft nach rechts in seine dritte Stellung verschoben. In der dritten Stellung ist die zweite Verbindung zum Spülen der Hochdruckpumpe 8 mit Kraftstoff freigegeben, die von der Zulaufleitung 34 durch die zweite, in dem Ventilkörper 42 angeordnete Drosseleinrichtung 32, durch den Steuerraum 66 und den Durchgangskanal 54 in eine Überführung 80, und anschließend durch die Ablauföffnung 50, die Leckageleitung 68 in den Zulaufkanal 40 zu der Hochdruckpumpe 8 verläuft. Dabei ist die Überführung 80 als eine Ausbuchtung im Ventilkörper 42 an einer Seitenwand der Ausnehmung 46 ausgebildet. Ferner wird im vorliegenden Fall ein auftretender Leckagestrom über die in dem Verschlusselement 62 der Ausnehmung 46 angeordnete Ablauföffnung 50 und die Leckagerückleitung 68 in den Zulaufkanal 40 abgeleitet.

Fig. 7a zeigt ein Schaltbild einer Ventileinrichtung gemäß einer fünften Ausführungsform der Erfindung. Hierbei umfasst die Ventileinrichtung 26 zwei parallel geschaltete Druckregelventile 72, 74. Die Druckregelventile 72, 74 weisen jeweils ein als Druckschließglied ausgebildetes Stellglied 36 a, 36 b auf, die jeweils von einer Rückstelleinrichtung 38 a, 38 b vorzugsweise einer Federeinrichtung, beaufschlagt werden. Das erste Druckregelventil 72 ist in der Zuführung 24 zur Hochdruckpumpe 8 angeordnet und umfasst die erste Drosseleinrichtung 30. Von der an die Zuführung 24 angeschlossenen Zulaufleitung 34 zweigt eine Verbindungsleitung 76 vor dem ersten Druckregelventil 72 ab, die nach dem ersten Druckregelventil 72 wieder an die Zuführung 24 und den Zulaufkanal 40 zu der Hochdruckpumpe 8 angeschlossen ist. In der Verbindungsleitung 76 sind nacheinander die zweite Drosseleinrichtung 32 und das zweite Druckregelventil 74 vorgesehen.

Wie in Fig. 7b zu erkennen, gibt das erste Stellglied 36 a des ersten Druckregelventils 72 in der dargestellten Ausgangstellung des Stellglieds 36 a den Entlüftungsquerschnitt Q1 frei, der der Drosselung dient. Hingegen ist in der Ausgangsstellung der Ventileinrichtung 26 das zweite Stellglied 36 b des zweiten Druckregelventils 74 durch den Haltedruck der Rückstelleinrichtung 38 beaufschlagt und verschließt die Verbindungsleitung 76. Aus dem über die Zulaufleitung 34 zugeführten Kraftstoffstrom kann die Luft durch den Entlüftungsquerschnitt Q1 des ersten Druckregelventils 72 in den Zulaufkanal 40 zur Hochdruckpumpe 8 entweichen.

Nach dem Entlüften nimmt der Staudruck an der in dem ersten Druckregelventil 72 integrierten ersten Drosseleinrichtung 30 zu, so dass das erste Stellglied 36 a gegen die Federkraft der ersten Rückstelleinrichtung 38 a gedrückt wird und in seiner zweiten Stellung einen Ventilauslass 78 in den Zulaufkanal 40 verschließt. Hierbei ist die Rückstellkraft der zweiten Rückstelleinrichtung 38 b derart eingestellt, dass in der zweiten Stellung des ersten Stellglieds 36 a auch die Verbindungsleitung 76 durch das zweite Stellglied 36 b geschlossen ist. In der zweiten Stellung ist somit die Zuführung 24 zur Hochdruckpumpe 8 unterbrochen, so dass der gesamte Kraftstoffstrom der Hochdruckpumpe für einen schnellen Druckaufbau zugeführt werden kann.

Nach dem Füllen der Hochdruckpumpe 8 steigt der Druck nach der Vorförderpumpe 6 weiter an, so dass in der Ventileinrichtung 26 ein höherer Staudruck anliegt. Durch den hohen Staudruck bleibt das erste Druckregelventil 72 geschlossen. Das zweite Stellglied 36 b des zweiten Druckregelventils 74 wird jedoch gegen die Federkraft der Rückstelleinrichtung 38 b nach rechts bewegt, so dass eine Verbindung durch das zweite Druckregelventil 74 in der Verbindungsleitung 76 freigegeben ist. In dieser dritten Stellung der Druckregelventile, in der das erste Druckregelventil 72 geschlossen und das zweite Druckregelventil 74 geöffnet ist, fließt ein Spülstrom von der Zulaufleitung 34 über die Verbindungsleitung 76 durch das zweite Druckregelventil 74 in den Zulaufkanal 40 zu der Hochdruckpumpe. Hierdurch ist eine Schmierung und Kühlung der Hochdruckpumpe 8 im normalen Betriebszustand des Einspritzsystems gewährleistet. Der Spülstrom zu der Hochdruckpumpe 8 kann über die zweite Drosseleinrichtung 32, die vor dem zweiten Druckregelventil 74 in der Verbindungsleitung 78 angeordnet ist, geregelt und eingestellt werden.

## Patentansprüche

1. Einspritzsystem für eine Brennkraftmaschine mit
- einer Vorförderpumpe (6),
- einer Hochdruckpumpe (8)und
- einem Hochdruckspeicher (10)
die über eine Kraftstoffleitung (4) miteinander verbunden sind, um Kraftstoff aus einem Kraftstofftank (2) über die Vorförderpumpe (6) und die Hochdruckpumpe (8) in den Hochdruckspeicher (10) zu fördern und
- einer Zuführung (24)
für die Hochdruckpumpe (8), die an der Kraftstoffleitung (4) zwischen der Vorförderpumpe (6) und der Hochdruckpumpe (8) angeschlossen ist, um der Hochdruckpumpe (8) Kraftstoff zur Schmierung und Kühlung zuzuführen und das Einspritzsystem zu entlüften,
**dadurch gekennzeichnet, dass**
eine an die Zuführung (24) angeschlossen Ventileinrichtung (26) vorgesehen ist, die den Kraftstoffstrom zur Schmierung und Kühlung der Hochdruckpumpe regelt und das Einspritzsystem entlüftet, und dass die Ventileinrichtung (26) zumindest ein beweglich angeordnetes Stellglied (36) sowie eine erste (30) und eine zweite Drosseleinrichtung (32) umfasst, wobei das Stellglied (36) in Abhängigkeit von einem Druck des Kraftstoffstroms zwischen der Vorförderpumpe (6) und der Hochdruckpumpe (8) derart eingestellt ist, dass eine erste Verbindung durch die erste Drosseleinrichtung (30) zu der Hochdruckpumpe (8) freigegeben oder die Zuführung (24) zu der Hochdruckpumpe (8) unterbrochen oder eine zweite Verbindung durch die zweite Drosseleinrichtung (32) zu der Hochdruckpumpe (8) freigegeben ist.

2. Einspritzsystem nach Anspruch 1, **dadurch gekennzeichnet, dass** die erste (30) und die zweite (32) Drosseleinrichtung unterschiedliche Durchflussquerschnitte aufweisen.

3. Einspritzsystem nach Anspruch 1 oder 2, **dadurch gekennzeichnet, dass** die erste und/oder die zweite Drosseleinrichtung (30, 32) in dem Stellglied (36) integriert ausgebildet ist.

4. Einspritzsystem nach zumindest einem der vorhergehenden Ansprüche, **dadurch gekennzeichnet, dass** das Stellglied (36) zumindest einen Durchgangskanal (54) aufweist.

5. Einspritzsystem nach zumindest einem der vorhergehenden Ansprüche, **dadurch gekennzeichnet, dass** das Stellglied (36) als Durchflussquerschnitt-Stellglied oder Druckstellglied ausgebildet ist.

6. Einspritzsystem nach zumindest einem der vorhergehenden Ansprüche, **dadurch gekennzeichnet, dass** die Ventileinrichtung (26) zumindest ein Wegeventil und/oder zumindest ein Druckbegrenzungsventil umfasst.

7. Einspritzsystem nach Anspruch 6, **dadurch gekennzeichnet, dass** die Drosseleinrichtungen (30, 32), das Wegeventil und/oder das Druckbegrenzungsventil in der Ventileinrichtung (26) zusammengebaut sind.

8. Einspritzsystem nach zumindest einem der vorhergehenden Ansprüche, **dadurch gekennzeichnet, dass** das Stellglied (36) so eingestellt ist, dass die erste Verbindung durch die zweite Drosseleinrichtung (32) und die erste Drosseleinrichtung (30) freigegeben ist.

## Claims

1. Injection system for an internal combustion engine, with
- a prefeed pump (6),
- a high-pressure pump (8) and
- a high-pressure accumulator (10)
which are connected to one another via a fuel line (4), in order to convey fuel out of a fuel tank (2) via the prefeed pump (6) and the high-pressure pump (8) into the high-pressure accumulator (10), and
- a feed (24)
for the high-pressure pump (8), said feed being connected to the fuel line (4) between the prefeed pump (6) and the high-pressure pump (8), in order to supply fuel for lubrication and cooling to the high-pressure pump (8) and to bleed the injection system,
**characterized in that** a valve device (26) connected to the feed (24) is provided, which regulates the fuel stream for lubricating and cooling the high-pressure pump and which bleeds the injection system, and **in that** the valve device (26) comprises at least one movably arranged actuator (36) and a first (30) and a second (32) throttle device, the actuator (36) being set as a function of a pressure of the fuel stream between the prefeed pump (6) and the high-pressure pump (8), in such a way that a first connection through the first throttle device (30) to the high-pressure pump (8) is released or the f0eed (24) to the high-pressure pump (8) is interrupted or a second connection through the second throttle device (32) to the high-pressure pump (8) is released.

2. Injection system according to Claim 1, **characterized in that** the first (30) and the second (32) throttle device have different throughflow cross sections.

3. Injection system according to Claim 1 or 2, **characterized in that** the first and/or the second throttle device (30, 32) are designed to be integrated in the actuator (36).

4. Injection system according to at least one of the preceding claims, **characterized in that** the actuator (36) has at least one passage duct (54).

5. Injection system according to at least one of the preceding claims, **characterized in that** the actuator (36) is designed as a throughflow-cross section actuator or pressure actuator.

6. Injection system according to at least one of the preceding claims, **characterized in that** the valve device (26) comprises at least one directional valve and/or at least one pressure limiting valve.

7. Injection system according to Claim 6, **characterized in that** the throttle devices (30, 32), the directional valve and/or the pressure limiting valve are assembled in the valve device (26).

8. Injection system according to at least one of the preceding claims, **characterized in that** the actuator (36) is set in such a way that the first connection through the second throttle device (32) and the first throttle device (30) is released.

## Revendications

1. Système d'injection pour moteur à combustion interne, comprenant
- une pompe de préalimentation (6),
- une pompe haute pression (8) et
- un accumulateur haute pression (10), qui sont reliés entre eux par une conduite de carburant (4) afin d'alimenter l'accumulateur haute pression (10) en carburant provenant d'un réservoir de carburant (2), par la pompe de préalimentation (6) et la pompe haute pression (8), et
- une amenée (24) pour la pompe haute pression (8) étant reliée à la conduite de carburant (4) entre la pompe de préalimentation (6) et la pompe haute pression (8) afin d'amener du carburant à la pompe haute pression (8) pour la lubrifier et refroidir et pour purger le système d'injection,
**caractérisé en ce qu'**un dispositif de soupape (26) relié à l'amenée (24) est prévu qui règle le courant du carburant pour la lubrification et le refroidissement et purge le système d'injection, et que le dispositif de soupape (26) comprend au moins un élément de commande (36) mobile ainsi qu'un premier (30) et un deuxième dispositif d'étranglement (32), l'élément de commande (36) étant ajusté en fonction d'une pression du courant de carburant entre la pompe de préalimentation (6) et la pompe haute pression (8) de telle façon qu'une première connexion est ouverte à travers le premier dispositif d'étranglement (30) vers la pompe haute pression (8), ou l'admission à la pompe haute pression (8) est interrompue, ou une deuxième connexion à travers le deuxième dispositif d'étranglement (32) vers la pompe haute pression (8) est ouverte.

2. Système d'injection selon la revendication 1, **caractérisé en ce que** le premier (30) et le deuxième dispositif d'étranglement (32) présentent des sections d'écoulement différentes.

3. Système selon la revendication 1 ou 2, **caractérisé en ce que** le premier et/ou le deuxième dispositif d'étranglement (30, 32) sont intégrés dans l'élément de commande (36).

4. Système selon au moins une des revendications précédentes, **caractérisé en ce que** l'élément de commande (36) présente au moins un canal de passage (54).

5. Système selon au moins une des revendications précédentes, **caractérisé en ce que** l'élément de commande (36) est aménagé comme élément de commande de débit ou élément de commande de pression.

6. Système selon au moins une des revendications précédentes, **caractérisé en ce que** le dispositif de soupape (26) comporte au moins une soupape de distribution et/ou au moins une soupape de limitation de pression.

7. Système selon la revendication 6, **caractérisé en ce que** les dispositifs d'étranglement (30, 32), la soupape de distribution et la soupape de limitation de pression sont réunis dans le dispositif de soupape (26).

8. Système selon au moins une des revendications précédentes, **caractérisé en ce que** l'élément de commande (36) est réglé de telle manière que la première connexion à travers le deuxième dispositif d'étranglement (32) et le premier dispositif d'étranglement (30) soit ouverte.
